# EUROPEAN PATENT SPECIFICATION

(11) **EP 3 110 075 B1**
(45) Date of publication and mention of the grant of the patent: **29.04.2020**
(21) Application number: 16159119.3
(22) Date of filing: 08.03.2016
(51) Int. Cl.: H04L 12/28, B60H 1/00

(54) **METHOD AND APPARATUS FOR MONITORING STATUS OF TERMINAL COMPRESSOR**
VERFAHREN UND VORRICHTUNG ZUR ÜBERWACHUNG DES STATUS EINES ENDVERDICHTERS
PROCÉDÉ ET APPAREIL POUR SURVEILLER L'ÉTAT D'UN COMPRESSEUR TERMINAL

(30) Priority: 25.06.2015 CN 201510359748
(43) Date of publication of application: 28.12.2016
(73) Proprietor: Xiaomi Inc., Beijing 100085 (CN)
(72) Inventor: HAN, Guangyi, 100085 Haidian District (CN); LIANG, Yue, 100085 Haidian District (CN); HOU, Enxing, 100085 Haidian District (CN)
(74) Representative: Sadler, Peter Frederick

(56) References cited:
- JP-A- 2005 241 089
- US-A1- 2011 060 553
- REIMCHE W ET AL: "Basics of vibration monitoring for fault detection and process control", INTERNET CITATION, 2 June 2003 (2003-06-02), XP002454577, Retrieved from the Internet: URL:http://www.aaende.org.ar/ingles/sitio/ biblioteca/material/T-039.pdf [retrieved on 2007-10-11]

## Description

### FIELD

The present disclosure relates to the field of intelligent household technology, and more particularly, to a method and an apparatus for monitoring a status of a terminal compressor.

### BACKGROUND

Currently, intelligent households are instrumented under an influence of the Internet. The intelligent household connects various devices (such as an air conditioner, audiovisual equipment, a lighting system, a curtain controller, a security system, a digital theater system, a video server, a video archival system, or network home appliances) in a house with the technology of IOT (Internet of Things), to provide various functions and means, such as household appliance control, lighting control, telephone remote control, indoor and outdoor remote control, burglar alarming, environment monitoring, heating and ventilation control, an infrared transponding and programmable timing control. The intelligent household not only has a traditional residential function, but also has advantages of architecture, network communication, information household appliances, and equipment automation, along with a comprehensive information interaction function.

A compressor is a core working component of a device such as an air conditioner, whose working status may directly affect the service life and working quality of the whole device using the compressor. US2011/0060553 relates to a diagnostic system for a home appliance that remotely performs fault diagnosis of the home appliance by receiving product information as a sound signal output by the home appliance and using this to check a state of the home appliance. JP2005/241089 describes a diagnosing device that judges an abnormality of a compressor on the basis of a composite variable comprising acoustic pressure, vibration and electric current. "Basics of vibration monitoring for fault detection and process control" by W Reimche et al of 2 June 2003 relates to a vibration analysis using statistical time values for general signal description and threshold comparison, envelope analysis and spectrum, phase and correlation analysis of multi sensor arrangements.

### SUMMARY

Embodiments of the present disclosure provide a method for monitoring a status of a compressor and an apparatus for monitoring a status of a compressor. The technical solution is presented as follows.

According to a first aspect of embodiments of the present disclosure, there is provided a method for monitoring a status of a compressor according to claim 1.

In an embodiment, the step of obtaining the working status parameter of the compressor at the first terminal may include: receiving the working status parameter by pre-established communication connection with the first terminal.

It is possible to provide a communication channel for receiving the working status parameter of the compressor at the first terminal by the pre-established communication connection, and various types of communication connection may provide many possibilities for the way of receiving the working status parameter.

In an example, when the working status parameter includes a working current of the compressor, the step of determining whether the working status parameter falls into the preset range may include: determining whether the working current exceeds a preset normal working current range of the compressor.

If the working status parameter is not within the preset range, one possibility is to exceed the normal working current range, and the other possibility is that the compressor does not work in a working current range suitable for the preset operation mode although it works in the normal current arrange, both of which belong to the abnormalities. The embodiment covers all the abnormalities of the working status parameter as many as possible.

In an embodiment, the step of analyzing the reason for the abnormality may include: obtaining historic operation information of the compressor, and determining the reason for the abnormality according to the historic operation information of the compressor.

It is possible to make the analysis of the reason for the abnormality easy, fast and accurate by determining the reason for the abnormality according to the historic operation information.

In an embodiment, the historic operation information includes a serviced life and a fault log of the compressor.

The step of determining the reason for the abnormality according to the historic operation information of the compressor includes: matching the fault log and a current working current of the compressor with a pre-stored fault log to obtain a first matching result, and determining whether the compressor has a fault and determining the reason for the fault according to the first matching result; determining whether the compressor is aged according to the serviced life of the compressor when no fault occurs; and determining whether the compressor does not execute an instruction of the preset operation mode issued by a user when the compressor is not aged.

The possible causes of the abnormality are gradually ruled out according to the fault log, the serviced life and the determination whether the instruction of the preset operation mode issued by the user is executed, and according to the possibilities for the abnormality. The more carefully the analysis of the reason for the abnormality is conducted, the more accurate and reliable the final analysis result is.

In an embodiment, when the working status parameter includes a vibration displacement of the compressor, the step of determining whether the working status parameter falls into the preset range may include: determining whether the vibration displacement exceeds a preset displacement threshold and lasts for a time period longer than a preset time threshold.

In an embodiment, the step of analyzing the reason for the abnormality may include: matching a vibration displacement curve corresponding to the vibration displacement with a pre-stored vibration displacement curve corresponding to various faults to obtain a second matching result; and determining whether the compressor has a fault and determining the reason for the fault according to the second matching result.

It is possible to make the analysis of the reason for the abnormality easy, fast and accurate by determining whether the compressor has a fault and determining the reason for the fault according to the vibration displacement curve.

In an embodiment, the step of pushing the preset information to the second terminal may include: pushing prompt information of the abnormality to the second terminal; and pushing prompt information of the reason for the abnormality to the second terminal when obtaining the reason for the abnormality.

The user may be informed of the occurrence of the abnormality of the compressor at the first terminal and of the reason for the abnormality via the second terminal which has a control relationship with the first terminal and to which the prompt information of the reason for the abnormality is pushed. Thus, the user may take further action regarding the abnormality at the first terminal, so as to realize the intellectualization of the first terminal and to improve user experience.

According to a second aspect of embodiments of the present disclosure, there is provided an apparatus for monitoring a status of a compressor according to claim 8.

In an embodiment, the obtaining module may include: an obtaining sub-module configured to receive the working status parameter by pre-established communication connection with the first terminal.

In an example, when the working status parameter includes a working current of the compressor, the judging/determining module may include: a first judging/determining sub-module configured to determine whether the working current exceeds a preset normal working current range of the compressor.

In an embodiment, the analyzing and pushing module may include a first determining sub-module configured to obtain historic operation information of the compressor, and to determine the reason for the abnormality according to the historic operation information of the compressor.

In an embodiment, the historic operation information includes a serviced life and a fault log of the compressor. The first determining sub-module is further configured to match the fault log and a current working current of the compressor with a pre-stored fault log to obtain a first matching result, and to determine whether the compressor has a fault and determine the reason for the fault according to the first matching result; the first determining sub-module is further configured to determine whether the compressor is aged according to the serviced life of the compressor when no fault occurs; and the first determining sub-module is further configured to determine whether the compressor does not execute an instruction of the preset operation mode issued by a user when the compressor is not aged.

In an embodiment, when the working status parameter includes a vibration displacement of the compressor, the judging/determining module may include a third judging/determining sub-module configured to determine whether the vibration displacement exceeds a preset displacement threshold and lasts for a time period longer than a preset time threshold.

In an embodiment, the analyzing and pushing module may include a second determining sub-module configured to match a vibration displacement curve corresponding to the vibration displacement with a pre-stored vibration displacement curve corresponding to various faults to obtain a second matching result, and to determine whether the compressor has a fault and determine the reason for the fault according to the second matching result.

In an embodiment, the analyzing and pushing module may include a pushing sub-module configured to push prompt information of the abnormality to the second terminal, and to push prompt information of the reason for the abnormality to the second terminal when the reason for the abnormality is obtained.

According to a third aspect of embodiments of the present disclosure, there is provided an apparatus for monitoring a status of a compressor according to claim 13.

According to the embodiments of the present disclosure, the technical solution has the following advantageous effects. The above technical solution includes: obtaining the working status parameter of the compressor at the first terminal; determining whether the working status parameter falls into the preset range; determining that the abnormality of the compressor occurs if the working status parameter does not fall into the preset range; and analyzing the reason for the abnormality and pushing preset information to the second terminal that has a control relationship with the first terminal. The preset information is pushed to the second terminal when it is determined that the abnormality of the compressor occurs, such that the user can be informed of the occurrence of the abnormality of the compressor at the first terminal and of the reason for the abnormality via the second terminal, and hence the user can take further action regarding the abnormality of the compressor at the first terminal, so as to realize the intellectualization of the first terminal and to improve user experience.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart of a method for monitoring a status of a terminal compressor according to an exemplary embodiment.
Fig. 2 is a flow chart of step 102 in a method for monitoring a status of a terminal compressor according to an exemplary embodiment.
Fig. 3 is another flow chart of step 102 in a method for monitoring a status of a terminal compressor according to an exemplary embodiment.
Fig. 4 is a flow chart of step 104 in a method for monitoring a status of a terminal compressor according to an exemplary embodiment.
Fig. 5 is a flow chart of step 401 in a method for monitoring a status of a terminal compressor according to an exemplary embodiment.
Fig. 6 is a flow chart of step 102 in a method for monitoring a status of a terminal compressor according to an exemplary embodiment.
Fig. 7 is a flow chart of step 104 in a method for monitoring a status of a terminal compressor according to an exemplary embodiment.
Fig. 8 is a flow chart of step 104 in a method for monitoring a status of a terminal compressor according to an exemplary embodiment.
Fig. 9 is a schematic diagram of an apparatus for monitoring a status of a terminal compressor according to an exemplary embodiment.
Fig. 10 is a schematic diagram of an obtaining module 91 of an apparatus for monitoring a status of a terminal compressor according to an exemplary embodiment.
Fig. 11 is a schematic diagram of a judging/determining module 92 of an apparatus for monitoring a status of a terminal compressor according to an exemplary embodiment.
Fig. 12 is a schematic diagram of a judging/determining module 92 of an apparatus for monitoring a status of a terminal compressor according to an exemplary embodiment.
Fig. 13 is a schematic diagram of an analyzing and pushing module 94 of an apparatus for monitoring a status of a terminal compressor according to an exemplary embodiment.
Fig. 14 is a schematic diagram of a judging/determining module 92 of an apparatus for monitoring a status of a terminal compressor according to an exemplary embodiment.
Fig. 15 is a schematic diagram of an information analyzing and pushing module 94 of an apparatus for monitoring a status of a terminal compressor according to an exemplary embodiment.
Fig. 16 is a schematic diagram of an analyzing and pushing module 94 of an apparatus for monitoring a status of a terminal compressor according to an exemplary embodiment.
Fig. 17 is a schematic diagram of an apparatus suitable for monitoring a status of a terminal compressor according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

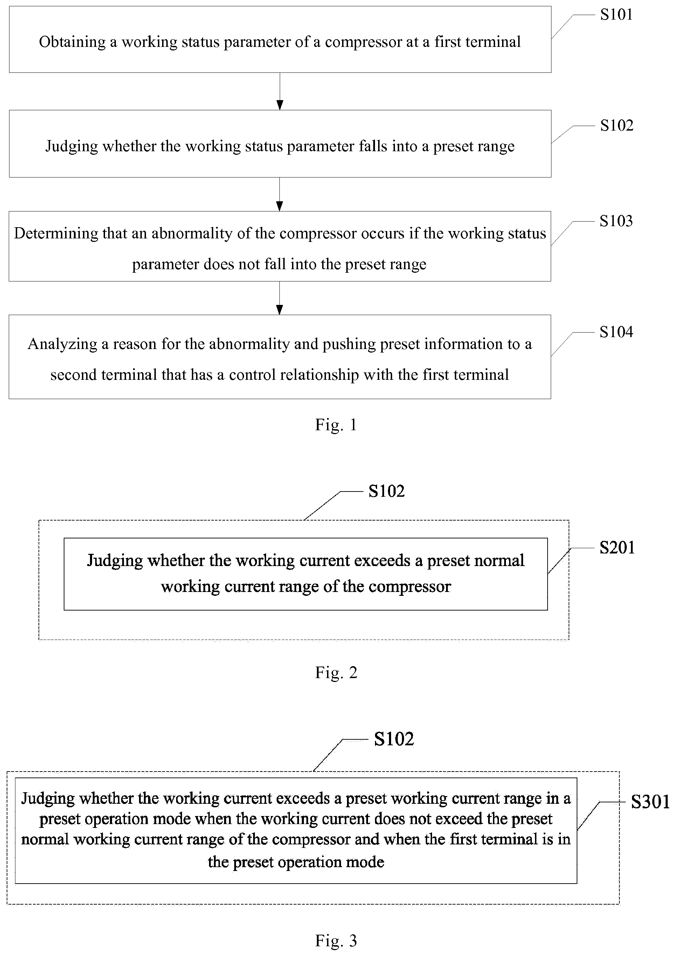

Fig. 1 is a flow chart of a method for monitoring a status of a terminal compressor according to an exemplary embodiment. As shown in Fig. 1, the method may be applied to a server, or any terminal equipment with a compressor (such as an air conditioner, a refrigerator and other equipments with a compressor), and include the following steps 101 to 104.

In step 101, a working status parameter of a compressor is obtained at a first terminal.

In an embodiment, when the method is applied to a first terminal, the first terminal obtains a working status parameter of the compressor and conducts a subsequent processing. The first terminal with the compressor may be any equipment with the compressor, such as an air conditioner, a refrigerator and other refrigeration equipments. The first terminal has a function of collecting the working status parameter. For example, a relevant sensor or detecting device is disposed in the air conditioner, the refrigerator and other refrigeration equipments with the compressor, so as to collect the relevant working status parameter.

In another embodiment, when the method is applied to a server, a working status parameter of the compressor at the first terminal is uploaded to the server via the first terminal, and the server receives the working status parameter uploaded by the first terminal. The working status parameter of the compressor collected by the first terminal is similar to the previous embodiment, which may be realized by providing a relevant working status parameter collector (like a sensor) within the first terminal to collect the relevant working status parameter. The working status parameter collected is not processed by the first terminal per se, but is uploaded to the server for processing.

In an embodiment, the working status parameter may include at least one of the parameters - a working current of the compressor and a vibration displacement of the compressor.

During implementation, the first terminal is provided with a current detecting device capable of detecting the working current of the compressor; the first terminal further includes a vibration sensor capable of detecting the vibration displacement of the compressor. For example, the first terminal can be connected to a router via a Wi-Fi module to transmit some important parameter information about the working current and vibration displacement of the compressor to the server. The user may control the working status of the first terminal via a second terminal (e.g. a mobile terminal application) that has a control relationship with the first terminal.

In an embodiment, the server may receive the working status parameter of the compressor at the first terminal by communication connection with the first terminal pre-established in a manner of near field communication connection, wireless LAN connection or wireless network connection via a public mobile communication network, so as to obtain the working status parameter closely or remotely.

In step 102, it is determined whether the working status parameter falls into a preset range.

The step 102 may be executed by the server or the first terminal equipment.

The preset range may be a normal working current range of the compressor or a normal vibration displacement range of the compressor, when the first terminal works. Since different first terminals may have different powers, the corresponding working current and vibration displacement of the first terminals are different. Thus, different preset ranges may be set for different first terminal compressors. It is conceivable that the preset range may be a preset value.

In step 103, it is determined that an abnormality of the compressor occurs if the working status parameter does not fall into the preset range.

The step 103 may be executed by the server or the first terminal equipment.

The abnormality of the compressor may be caused by failure of the compressor, ageing of the compressor, failure of execution of the instruction of the user, or some other reasons, which needs to be further analyzed and determined.

In step 104, a reason for the abnormality is analyzed and preset information is pushed to a second terminal that has a control relationship with the first terminal.

The step 104 may be executed by the server or the first terminal equipment.

The second terminal may be a mobile terminal, or a terminal at a fixed position. The preset information may be set as different contents according to the reason for the abnormality. When the second terminal receives the preset information, it is possible to quickly determine which kind of abnormality occurs.

Connection is pre-established between the second terminal and the server or between the second terminal and the first terminal in advance, so as to push the preset information to the second terminal equipment via the server or the first terminal equipment. The establishment of connection is based on the control right of the second terminal to the first terminal. That is, only after the control right of the second terminal is verified, the connection may be established with the first terminal or the server, so as to guarantee the security and reliability of pushing the preset information.

Similarly, the connection between the second terminal and the server or between the second terminal and the first terminal may be realized in various network connection ways, such as near field communication connection, wireless LAN connection, and wireless network connection via a public mobile communication network.

The above method according to embodiments of the present disclosure may be applied to the server or the first terminal. By steps of obtaining the working status parameter of the compressor at the first terminal; determining whether the working status parameter falls into the preset range; determining that the abnormality of the compressor occurs if the working status parameter does not fall into the preset range; and analyzing the reason for the abnormality and pushing preset information to the second terminal that has a control relationship with the first terminal, the server or the first terminal per se both may push the preset information to the second terminal when it is determined that the abnormality of the compressor occurs, such that the user can be informed of the occurrence of the abnormality of the compressor at the first terminal and of the reason for the abnormality via the second terminal timely, and hence the user can take further action regarding the abnormality of the compressor at the first terminal, so as to realize the intellectualization of the first terminal and to improve user experience.

In an embodiment, the working status parameter includes a working current of the compressor at the first terminal.

The step 102 may be implemented as the following step 201 or step 301.

As shown in Fig. 2, in step 201, it is determined whether the working current exceeds a preset normal working current range of the compressor.

Alternatively, as shown in Fig. 3, in step 301, it is determined whether the working current exceeds a preset working current range in a preset operation mode when the working current does not exceed the preset normal working current range of the compressor and when the first terminal is in the preset operation mode.

Generally, the first terminal has different operation modes in the light of different requirements of the user. For example, an air conditioner has different operation modes of cooling, heating, dehumidification, air supply and power saving. In each mode, the working current range is distinctive. For instance, if the user sets the air conditioner into the power saving mode but the actual working current is huge, exceeding the normal working current range of the compressor in the power saving mode, it can be determined that an abnormality of the compressor occurs. Compared with step 201, in step 301, it is possible to determine more accurately whether the working current of the compressor falls into the preset range by determining whether the working current exceeds the preset working current range in the preset operation mode.

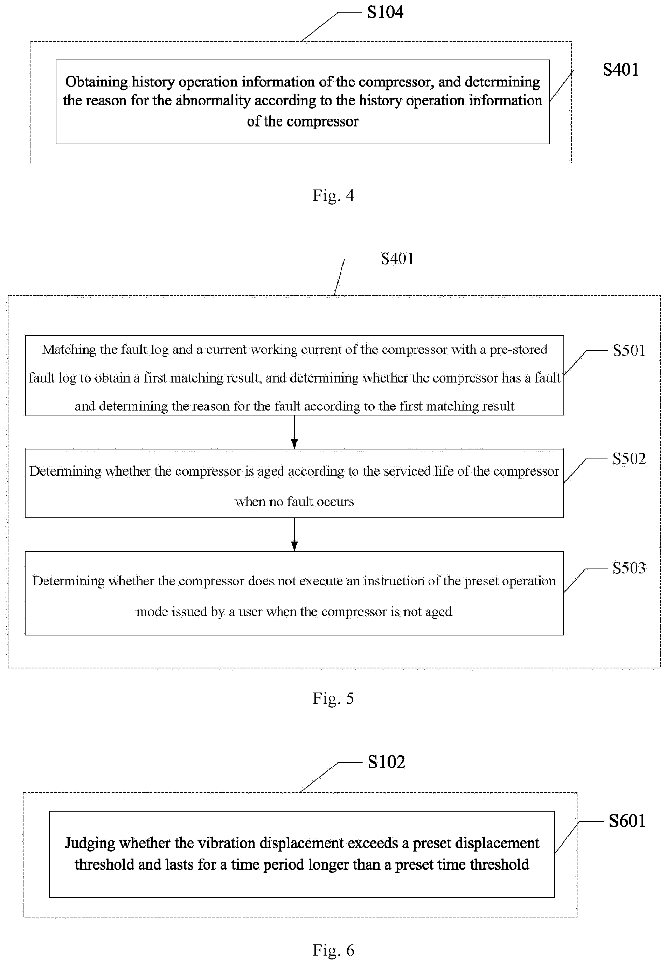

In an embodiment, as shown in Fig. 4, the step 104 may include step 401.

In step 401, historic operation information of the compressor is obtained, so as to determine the reason for the abnormality according to the historic operation information of the compressor.

In an embodiment, the historic operation information includes a serviced life and a fault log of the compressor. When the compressor has an abnormality, it is possible to determine the reason for the abnormality quickly and accurately according to the historic operation information of the compressor.

As shown in Fig. 5, the step 401 may include steps 501 to 503.

In step 501, the fault log and the current working current of the compressor are matched with a pre-stored fault log to obtain a first matching result, and it is determined whether the compressor has a fault and the reason for the fault is determined according to the first matching result. It is determined whether the compressor is aged according to the historic operation information, the current working current and the current operation mode of the compressor, when no fault occurs. When the user controls the first terminal via the second terminal (like a terminal App), it is determined whether the instruction of the App is executed by the first terminal.

In step 502, it is determined whether the compressor is aged according to the serviced life of the compressor when no fault occurs.

Since aging is one of the reasons for the abnormality of the working status parameter of the compressor, it is further determined whether the compressor is aged according to the serviced life of the compressor when no fault occurs.

In step 503, it is determined whether the compressor does not execute an instruction of the preset operation mode issued by a user when the compressor is not aged.

It is possible that the compressor does not execute the instruction of the preset operation mode issued by the user, if no fault occurs and the compressor is not aged, which may result in the abnormality of the working status parameter. Consequently, it needs to be further determined whether the abnormality of the working status parameter is because the compressor does not execute the instruction of the preset operation mode. The reason for the abnormality of the working status parameter is finally determined by stepwise determination.

In this embodiment, the fault log is stored in the server or the first terminal in advance, such that it is possible to match the current working current with the pre-stored fault log when the abnormality of the compressor occurs, so as to simply, quickly and accurately determine whether the compressor has a fault and determine the reason for the fault.

In an embodiment, the working status parameter includes a vibration displacement of the compressor at the first terminal.

As shown in Fig. 6, the step 102 may be executed as the following step 601. In step 601, it is determined whether the vibration displacement exceeds a preset displacement threshold and lasts for a time period longer than a preset time threshold.

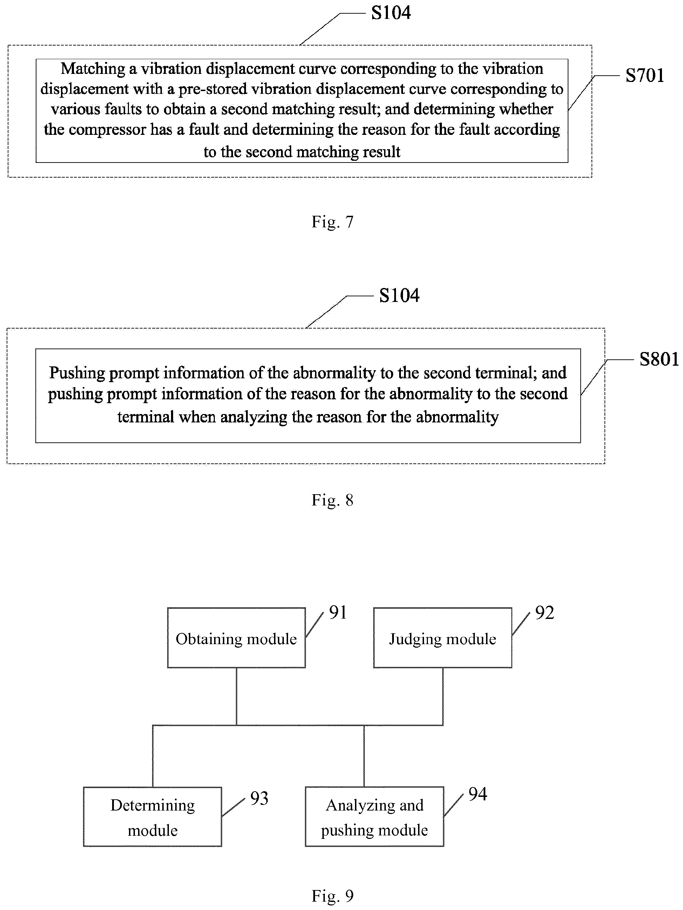

In an embodiment, as shown in Fig. 7, the step 104 may include step 701. In step 701, a vibration displacement curve corresponding to the vibration displacement is matched with a pre-stored vibration displacement curve corresponding to various faults to obtain a second matching result; and it is determined whether the compressor has a fault and the reason for the fault is determined according to the second matching result.

In this embodiment, the vibration displacement curve corresponding to various faults is pre-stored in the server or the first terminal. The vibration displacement curve corresponding to the vibration displacement is compared with the pre-stored vibration displacement curve of the compressor when the vibration displacement of the compressor is too large and lasts for a long time, so as to rapidly determine whether the compressor has a fault and the reason corresponding to the fault.

In an embodiment, as shown in Fig. 8, step 104 may include step 801. In step 801, prompt information of the abnormality is pushed to the second terminal; and prompt information of the reason for the abnormality is pushed to the second terminal when the reason for the abnormality is obtained. Consequently, the user may be informed of the abnormality of the compressor timely and directly.

The above method according to embodiments of the present disclosure includes: obtaining the working status parameter of the compressor at the first terminal; determining whether the working status parameter falls into the preset range; determining that the abnormality of the compressor occurs if the working status parameter does not fall into the preset range; and analyzing the reason for the abnormality and pushing preset information to the second terminal that has a control relationship with the first terminal. The preset information is pushed to the second terminal when it is determined that the abnormality of the compressor occurs, such that the user can be informed of the occurrence of the abnormality of the compressor at the first terminal and of the reason for the abnormality via the second terminal timely, and hence the user can take further action regarding the abnormality at the first terminal, so as to realize the intellectualization of the first terminal and to improve user experience.

In the following, an apparatus embodiment of the present disclosure may be used to execute the method embodiment of the present disclosure.

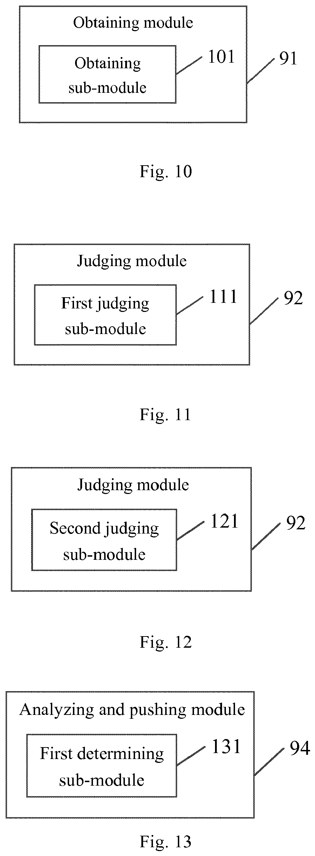

Fig. 9 is a schematic diagram of an apparatus for monitoring a status of a terminal compressor according to an exemplary embodiment. The apparatus may be applied to a server, and realized as part of an electronic device or as the electronic device by software, hardware, or the combination of the two. As shown in Fig. 10, the apparatus includes: an obtaining module 91 configured to obtain a working status parameter of a compressor at a first terminal; a determining module 92 configured to determine whether the working status parameter falls into a preset range; a determining module 93 configured to determine that an abnormality of the compressor occurs if the working status parameter does not fall into the preset range; and an analyzing and pushing module 94 configured to analyze a reason for the abnormality and to push preset information to a second terminal that has a control relationship with the first terminal.

In an embodiment, as shown in Fig. 10, the obtaining module 91 may include: an obtaining sub-module 101 configured to receive the working status parameter by pre-established communication connection with the first terminal.

In an embodiment, as shown in Fig. 11, when the working status parameter includes a working current of the compressor, the judging/determining module 92 may include a first judging/determining sub-module 111 configured to determine whether the working current exceeds a preset normal working current range of the compressor. Alternatively, as shown in Fig. 12, the judging/determining module 92 may include a second judging/determining sub-module 121 configured to determine whether the working current exceeds a preset working current range in a preset operation mode when the working current does not exceed the preset normal working current range of the compressor and when the first terminal is in the preset operation mode.

In an embodiment, as shown in Fig. 13, the analyzing and pushing module 94 may include: a first determining sub-module 131 configured to obtain historic operation information of the compressor, and to determine the reason for the abnormality according to the historic operation information of the compressor.

In an embodiment, the historic operation information includes a serviced life and a fault log of the compressor. The first determining sub-module 131 is further configured to match the fault log and a current working current of the compressor with a pre-stored fault log to obtain a first matching result, and to determine whether the compressor has a fault and determine the reason for the fault according to the first matching result; the first determining sub-module 131 is further configured to determine whether the compressor is aged according to the serviced life of the compressor when no fault occurs; and the first determining sub-module 131 is further configured to determine whether the compressor does not execute an instruction of the preset operation mode issued by a user when the compressor is not aged.

In an embodiment, the working status parameter may include a vibration displacement of the compressor at the first terminal.

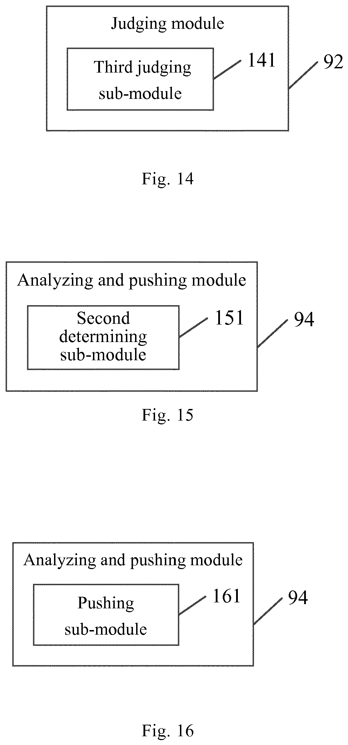

As shown in Fig. 14, the judging/determining module 92 may include a third judging/determining sub-module 141 configured to determine whether the vibration displacement exceeds a preset displacement threshold and lasts for a time period longer than a preset time threshold.

In an embodiment, as shown in Fig. 15, the analyzing and pushing module 94 may include: a second determining sub-module 151 configured to match a vibration displacement curve corresponding to the vibration displacement with a pre-stored vibration displacement curve corresponding to various faults to obtain a second matching result, and to determine whether the compressor has a fault and determine the reason for the fault according to the second matching result.

In an embodiment, as shown in Fig. 16, the analyzing and pushing module 94 may include: a pushing sub-module 161 configured to push prompt information of the abnormality to the second terminal such as a mobile terminal, and to push prompt information of the reason for the abnormality to the second terminal such as a mobile terminal when the reason for the abnormality is obtained.

With the above apparatus according to embodiments of the present disclosure, by obtaining the working status parameter of the compressor at the first terminal; determining whether the working status parameter falls into the preset range; determining that the abnormality of the compressor occurs if the working status parameter does not fall into the preset range; and analyzing the reason for the abnormality and pushing preset information to the second terminal that has a control relationship with the first terminal, the preset information is pushed to the second terminal when it is determined that the abnormality of the compressor occurs, such that the user can be informed of the occurrence of the abnormality of the compressor at the first terminal and of the reason for the abnormality via the second terminal timely, and hence the user can take further action regarding the abnormality of the compressor at the first terminal, so as to realize the intellectualization of the first terminal and to improve user experience.

According to a third aspect of embodiments of the present disclosure, there is provided an apparatus for monitoring a status of a terminal compressor. The apparatus includes: a processor and a memory configured to store an instruction executable by the processor, in which the processor is configured to obtain a working status parameter of a compressor at a first terminal; to determine whether the working status parameter falls into a preset range; to determine that an abnormality of the compressor occurs if the working status parameter does not fall into the preset range; and to analyze a reason for the abnormality and push preset information to a second terminal that has a control relationship with the first terminal.

The processor may be further configured such that obtaining the working status parameter of the compressor at the first terminal includes: receiving the working status parameter by pre-established communication connection with the first terminal.

The processor may be further configured such that the working status parameter may include a working current of the compressor; the step of determining whether the working status parameter falls into the preset range includes: determining whether the working current exceeds a preset normal working current range of the compressor; or determining whether the working current exceeds a preset working current range in a preset operation mode when the working current does not exceed the preset normal working current range of the compressor and when the first terminal is in the preset operation mode.

The processor may be further configured such that analyzing the reason for the abnormality may include: obtaining historic operation information of the compressor, and determining the reason for the abnormality according to the historic operation information of the compressor.

The processor may be further configured such that the historic operation information includes a serviced life and a fault log of the compressor; and the step of determining the reason for the abnormality according to the historic operation information of the compressor may include: matching the fault log and a current working current of the compressor with a pre-stored fault log to obtain a first matching result, and determining whether the compressor has a fault and determining the reason for the fault according to the first matching result; determining whether the compressor is aged according to the serviced life of the compressor when no fault occurs; and determining whether the compressor does not execute an instruction of the preset operation mode issued by a user when the compressor is not aged.

The processor may be further configured such that the working status parameter may include a vibration displacement of the compressor; the step of determining whether the working status parameter falls into the preset range includes: determining whether the vibration displacement exceeds a preset displacement threshold and lasts for a time period longer than a preset time threshold.

The processor may be further configured such that the step of analyzing the reason for the abnormality includes: matching a vibration displacement curve corresponding to the vibration displacement with a pre-stored vibration displacement curve corresponding to various faults to obtain a second matching result; and determining whether the compressor has a fault and determining the reason for the fault according to the second matching result.

The processor may be further configured such that the step of pushing the preset information to the second terminal may include: pushing prompt information of the abnormality to the second terminal; and pushing prompt information of the reason for the abnormality to the second terminal when obtaining the reason for the abnormality.

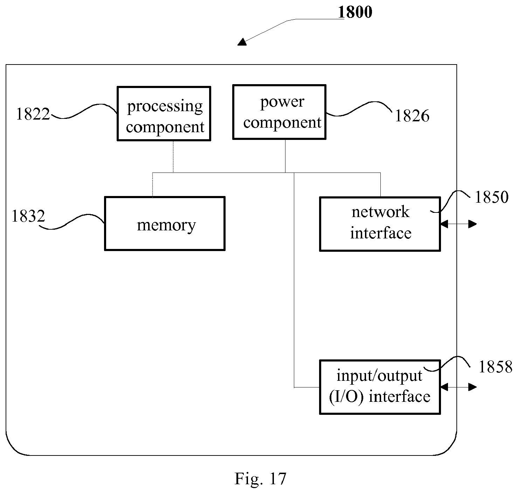

Fig. 17 is a schematic diagram of an apparatus suitable for monitoring a status of a terminal compressor according to an exemplary embodiment. For example, the apparatus 1800 may be provided as a server. The apparatus 1800 includes a processing component 1822, which further includes one or more processors, and memory resources represented by a memory 1832 for storing an instruction executable by the processing component 1822, like an application program. The application program stored in the memory 1832 may include one or more modules each corresponding to a group of instructions. In addition, the processing component 1822 is configured to execute the instructions to implement the above method.

The apparatus 1800 may further include a power component 1826 confiugred to execute power management of the apparatus 1800; a wired or wireless network interface 1850 configured to connect the apparatus 1800 to the Internet; and an input/output (I/O) interface 1858. The apparatus 1800 may operate based on an operation system stored in the memory 1832, such as Windows Server TM, Mac OS XTM, Unix TM, Linux TM, Free BSDTM or the like.

The present disclosure provides a non-transitory computer-readable storage medium, when the instructions in the storage medium are executed by the processor of the apparatus 1800, the apparatus is able to execute the abovementioned method for monitoring the status of the terminal compressor. The method includes: obtaining a working status parameter of a compressor at a first terminal; determining whether the working status parameter falls into a preset range; determining that an abnormality of the compressor occurs if the working status parameter does not fall into the preset range; and analyzing a reason for the abnormality and pushing preset information to a second terminal that has a control relationship with the first terminal.

In an embodiment, the step of obtaining the working status parameter of the compressor at the first terminal may include: receiving the working status parameter by pre-established communication connection with the first terminal.

In an embodiment, when the working status parameter includes a working current of the compressor, the step of determining whether the working status parameter falls into the preset range may include: determining whether the working current exceeds a preset normal working current range of the compressor; or determining whether the working current exceeds a preset working current range in a preset operation mode when the working current does not exceed the preset normal working current range of the compressor and when the first terminal is in the preset operation mode.

In an embodiment, the step of analyzing the reason for the abnormality may include: obtaining historic operation information of the compressor, and determining the reason for the abnormality according to the historic operation information of the compressor.

In an embodiment, the historic operation information includes a serviced life and a fault log of the compressor. The step of determining the reason for the abnormality according to the historic operation information of the compressor includes: matching the fault log and a current working current of the compressor with a pre-stored fault log to obtain a first matching result, and determining whether the compressor has a fault and determining the reason for the fault according to the first matching result; determining whether the compressor is aged according to the serviced life of the compressor when no fault occurs; and determining whether the compressor does not execute an instruction of the preset operation mode issued by a user when the compressor is not aged.

In an embodiment, when the working status parameter includes a vibration displacement of the compressor, the step of determining whether the working status parameter falls into the preset range may include: determining whether the vibration displacement exceeds a preset displacement threshold and lasts for a time period longer than a preset time threshold.

In an embodiment, the step of analyzing the reason for the abnormality may include: matching a vibration displacement curve corresponding to the vibration displacement with a pre-stored vibration displacement curve corresponding to various faults to obtain a second matching result; and determining whether the compressor has a fault and determining the reason for the fault according to the second matching result.

In an embodiment, the step of pushing the preset information to the second terminal may include: pushing prompt information of the abnormality to the second terminal; and pushing prompt information of the reason for the abnormality to the second terminal when obtaining the reason for the abnormality.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors. Other embodiments of the present disclosure will be apparent to those skilled in the art from consideration of the specification and practice of the disclosure disclosed here.

## Claims

1. A method for monitoring a status of a compressor at a first terminal, comprising:
obtaining (S101) a working status parameter of the compressor at the first terminal;
determining (S102) whether the working status parameter falls into a preset range;
determining (S103) that an abnormality of the compressor occurs if the working status parameter does not fall into the preset range; and
analyzing (S104) a reason for the abnormality and pushing preset information, indicative of the reason for, or type of, abnormality, to a second terminal that has a control relationship with the first terminal;
**characterized by**:
when the working status parameter comprises a working current of the compressor, determining (S102) whether the working status parameter falls into the preset range comprises:
determining (S301) whether the working current exceeds a preset working current range in a preset operation mode when the working current does not exceed a preset normal working current range of the compressor and when the first terminal is in the preset operation mode.

2. The method according to claim 1, wherein obtaining the working status parameter of the compressor at the first terminal comprises:
receiving the working status parameter by pre-established communication connection with the first terminal.

3. The method according to claim 1 or 2, wherein analyzing the reason for the abnormality comprises:
obtaining historic operation information of the compressor, and determining the reason for the abnormality according to the historic operation information of the compressor.

4. The method according to claim 3, wherein the historic operation information comprises a serviced life and a fault log of the compressor;
wherein determining the reason for the abnormality according to the historic operation information of the compressor comprises:
matching the fault log and a current working current of the compressor with a pre-stored fault log to obtain a first matching result, and determining whether the compressor has a fault and determining the reason for the fault according to the first matching result;
determining whether the compressor is aged according to the serviced life of the compressor when no fault occurs; and
determining whether the compressor does not execute an instruction of the preset operation mode issued by a user when the compressor is not aged.

5. The method according to any preceding claim, wherein when the working status parameter comprises a vibration displacement of the compressor, determining whether the working status parameter falls into the preset range comprises:
determining whether the vibration displacement exceeds a preset displacement threshold and lasts for a time period longer than a preset time threshold.

6. The method according to claim 5, wherein analyzing the reason for the abnormality comprises:
matching a vibration displacement curve corresponding to the vibration displacement with a pre-stored vibration displacement curve corresponding to various faults to obtain a second matching result; and determining whether the compressor has a fault and determining the reason for the fault according to the second matching result.

7. The method according to any one of claims 1 to 6, wherein pushing the preset information to the second terminal comprises:
pushing prompt information of the abnormality to the second terminal; and
pushing prompt information of the reason for the abnormality to the second terminal when obtaining the reason for the abnormality.

8. An apparatus for monitoring a status of a compressor at a first terminal, comprising:
an obtaining module (91) configured to obtain a working status parameter of the compressor at the first terminal;
a determining module (92) configured to determine whether the working status parameter falls into a preset range;
a determining module (93) configured to determine that an abnormality of the compressor occurs if the working status parameter does not fall into the preset range; and
an analyzing and pushing module (94) configured to analyze a reason for the abnormality and to push preset information, indicative of the reason for, or type of, abnormality, to a second terminal that has a control relationship with the first terminal;
**characterized by**:
when the working status parameter comprises a working current of the compressor, the determining module comprises:
a second determining sub-module (121) configured to determine whether the working current exceeds a preset working current range in a preset operation mode when the working current does not exceed a preset normal working current range of the compressor and when the first terminal is in the preset operation mode.

9. The apparatus according to claim 8, wherein the obtaining module comprises:
an obtaining sub-module configured to receive the working status parameter by pre-established communication connection with the first terminal.

10. The apparatus according to claim 8 or 9, wherein the analyzing and pushing module comprises:
a first determining sub-module configured to obtain historic operation information of the compressor, and to determine the reason for the abnormality according to the historic operation information of the compressor,
specially, wherein the historic operation information comprises a serviced life and a fault log of the compressor;
wherein the first determining sub-module is further configured to match the fault log and a current working current of the compressor with a pre-stored fault log to obtain a first matching result, and to determine whether the compressor has a fault and determine the reason for the fault according to the first matching result; the first determining sub-module is further configured to determine whether the compressor is aged according to the serviced life of the compressor when no fault occurs; and the first determining sub-module is further configured to determine whether the compressor does not execute an instruction of the preset operation mode issued by a user when the compressor is not aged.

11. The apparatus according to any of claims 8 to 10, wherein when the working status parameter comprises a vibration displacement of the compressor, the determining module comprises:
a third determining sub-module configured to determine whether the vibration displacement exceeds a preset displacement threshold and lasts for a time period longer than a preset time threshold,
wherein the analyzing and pushing module comprises:
a second determining sub-module configured to match a vibration displacement curve corresponding to the vibration displacement with a pre-stored vibration displacement curve corresponding to various faults to obtain a second matching result, and to determine whether the compressor has a fault and determine the reason for the fault according to the second matching result.

12. The apparatus according to any one of claims 8 to 11, wherein the analyzing and pushing module comprises:
a pushing sub-module configured to push prompt information of the abnormality to the second terminal, and to push prompt information of the reason for the abnormality to the second terminal when the reason for the abnormality is obtained.

13. An apparatus (1800) for monitoring a status of a terminal compressor, comprising:
a processor (1822);
a memory (1832) configured to store an instruction executable by the processor;
wherein the processor is configured to perform the method of any of claims 1 to 7.

## Patentansprüche

1. Verfahren zur Überwachung eines Status eines Verdichters an einem ersten Anschluss, das Folgendes umfasst:
Erhalten (S101) eines Parameters für den Betriebsstatus des Verdichters an dem ersten Anschluss;
Bestimmen (S102), ob der Parameter des Betriebsstatus in einen vorgegebenen Bereich fällt;
Bestimmen (S103), dass eine Anomalie des Verdichters auftritt, wenn der Parameter für den Betriebsstatus nicht in den vorgegebenen Bereich fällt; und
Analysieren (S104) eines Grundes für die Anomalie und Übertragen von vorgegebenen Informationen, die auf den Grund oder die Art der Anomalie hinweisen, an einen zweiten Anschluss, der in einer Steuerbeziehung zu dem ersten Anschluss steht;
**gekennzeichnet durch**:
wenn der Parameter des Betriebsstatus einen Betriebsstrom des Verdichters umfasst, das Bestimmen (S102), ob der Parameter des Betriebsstatus in den vorgegebenen Bereich fällt:
Bestimmen (S301), ob der Betriebsstrom einen vorgegebenen Betriebsstrombereich in einem vorgegebenen Betriebsmodus überschreitet, wenn der Betriebsstrom einen vorgegebenen normalen Betriebsstrombereich des Verdichters nicht überschreitet und wenn der erste Anschluss in dem vorgegebenen Betriebsmodus ist.

2. Verfahren nach Anspruch 1, wobei das Erhalten des Parameters des Betriebsstatus des Verdichters am ersten Anschluss Folgendes umfasst:
Empfangen des Parameters des Betriebsstatus durch eine vorher eingerichtete Kommunikationsverbindung mit dem ersten Anschluss.

3. Verfahren nach Anspruch 1 oder 2, wobei das Analysieren des Grundes für die Anomalie Folgendes umfasst:
Erhalten von historischen Betriebsinformationen des Verdichters und Bestimmen des Grundes für die Anomalie gemäß den historischen Betriebsinformationen des Verdichters.

4. Verfahren nach Anspruch 3, wobei die historischen Betriebsinformationen eine Lebensdauer und ein Fehlerprotokoll des Verdichters umfassen;
wobei das Bestimmen des Grundes für die Anomalie gemäß den historischen Betriebsinformationen des Verdichters Folgendes umfasst:
Abgleichen des Fehlerprotokolls und eines aktuellen Betriebsstroms des Verdichters mit einem vorgespeicherten Fehlerprotokoll, um ein erstes Abgleichergebnis zu erhalten, und Bestimmen, ob der Verdichter einen Fehler aufweist und Bestimmen des Grundes für den Fehler gemäß dem ersten Abgleichergebnis;
Bestimmen, ob der Verdichter gemäß der Lebensdauer des Verdichters im fehlerfreien Zustand gealtert ist; und
Bestimmen, ob der Verdichter eine von einem Benutzer erteilte Anweisung des vorgegebenen Betriebsmodus nicht ausführt, wenn der Verdichter nicht gealtert ist.

5. Verfahren nach einem der vorangehenden Ansprüche, wobei, wenn der Parameter des Betriebsstatus eine Vibrationsverlagerung des Verdichters umfasst, das Bestimmen, ob der Parameter des Betriebsstatus in den vorgegebenen Bereich fällt, Folgendes umfasst:
Bestimmen, ob die Vibrationsverlagerung eine vorgegebene Verlagerungsschwelle überschreitet und länger als eine vorgegebene Zeitschwelle andauert.

6. Verfahren nach Anspruch 5, wobei das Analysieren des Grundes für die Anomalie Folgendes umfasst:
Abgleichen einer Vibrationsverlagerungskurve, die der Vibrationsverlagerung entspricht, mit einer vorgespeicherten Vibrationsverlagerungskurve, die verschiedenen Fehlern entspricht, um ein zweites Abgleichergebnis zu erhalten; und
Bestimmen, ob der Verdichter einen Fehler aufweist und Bestimmen des Grundes für den Fehler gemäß dem zweiten Abgleichergebnis.

7. Verfahren nach einem der Ansprüche 1 bis 6, wobei das Übertragen der vorgegebenen Informationen auf den zweiten Anschluss Folgendes umfasst:
Übertragen von sofortigen Informationen über die Anomalie auf den zweiten Anschluss; und
Übertragen von sofortigen Informationen über den Grund für die Anomalie auf den zweiten Anschluss, wenn der Grund für die Anomalie ermittelt wird.

8. Vorrichtung zur Überwachung eines Status eines Verdichters an einem ersten Anschluss, die Folgendes umfasst:
ein Erhaltungsmodul (91), das so konfiguriert ist, dass es einen Parameter des Betriebsstatus des Verdichters an dem ersten Anschluss erhält;
ein Bestimmungsmodul (92), das so konfiguriert ist, dass es bestimmt, ob der Parameter des Betriebsstatus in einen vorgegebenen Bereich fällt;
ein Bestimmungsmodul (93), das so konfiguriert ist, dass es bestimmt, dass eine Anomalie des Verdichters auftritt, wenn der Parameter des Betriebsstatus nicht in den vorgegebenen Bereich fällt; und
ein Analyse- und Übertragungsmodul (94), das so konfiguriert ist, dass es einen Grund für die Anomalie analysiert und vorgegebene Informationen, die den Grund oder den Typ der Anomalie anzeigen, an einen zweiten Anschluss, der in einer Steuerbeziehung mit dem ersten Anschluss steht, übertragen kann;
**gekennzeichnet durch**:
wenn der Parameter des Betriebsstatus einen Betriebsstrom des Verdichters umfasst, umfasst das Bestimmungsmodul Folgendes:
ein zweites Bestimmungs-Submodul (121), das so konfiguriert ist, dass es bestimmt, ob der Betriebsstrom einen vorgegebenen Betriebsstrombereich in einem vorgegebenen Betriebsmodus überschreitet, wenn der Betriebsstrom einen vorgegebenen normalen Betriebsstrombereich des Verdichters nicht überschreitet und wenn der erste Anschluss in dem vorgegebenen Betriebsmodus ist.

9. Vorrichtung nach Anspruch 8, wobei das Erhaltungsmodul Folgendes umfasst:
ein Erhaltungs-Submodul, das so konfiguriert ist, dass es den Parameter des Betriebsstatus durch eine vorher eingerichtete Kommunikationsverbindung mit dem ersten Anschluss empfängt.

10. Vorrichtung nach Anspruch 8 oder 9, wobei das Analyse- und Übertragungsmodul Folgendes umfasst:
ein erstes Bestimmungs-Submodul, das so konfiguriert ist, dass es historische Betriebsinformationen des Verdichters erhält und den Grund für die Anomalie gemäß den historischen Betriebsinformationen des Verdichters bestimmt, insbesondere wobei die historischen Betriebsinformationen eine Lebensdauer und ein Fehlerprotokoll des Verdichters umfassen;
wobei das erste Bestimmungs-Submodul ferner so konfiguriert ist, dass es das Fehlerprotokoll und einen aktuellen Betriebsstrom des Verdichters mit einem vorgespeicherten Fehlerprotokoll abgleicht, um ein erstes Abgleichergebnis zu erhalten, und um zu bestimmen, ob der Verdichter einen Fehler aufweist, und um den Grund für den Fehler gemäß dem ersten Abgleichergebnis zu bestimmen;
das erste Bestimmungs-Submodul ist ferner so konfiguriert, dass es bestimmt, ob der Verdichter gemäß der Lebensdauer des Verdichters gealtert ist, wenn kein Fehler auftritt; und
das erste Bestimmungs-Submodul ist ferner so konfiguriert, dass es bestimmt, ob der Verdichter eine Anweisung des vorgegebenen Betriebsmodus nicht ausführt, die von einem Benutzer erteilt wurde, wenn der Verdichter nicht gealtert ist.

11. Vorrichtung nach einem der Ansprüche 8 bis 10, wobei, wenn der Parameter des Betriebsstatus eine Vibrationsverlagerung des Verdichters umfasst, das Bestimmungsmodul Folgendes umfasst:
ein drittes Bestimmungs-Untermodul, das so konfiguriert ist, dass es bestimmt, ob die Vibrationsverlagerung einen vorgegebenen Verlagerungsschwellenwert überschreitet und für eine Zeitdauer andauert, die länger als ein vorgegebener Zeitschwellenwert ist, wobei das Analyse- und Übertragungsmodul Folgendes umfasst:
ein zweites Bestimmungs-Submodul, das so konfiguriert ist, dass es eine Vibrationsverlagerungskurve, die der Vibrationsverlagerung entspricht, mit einer vorgespeicherten Vibrationsverlagerungskurve, die verschiedenen Fehlern entspricht, abgleicht, um ein zweites Abgleichergebnis zu erhalten, und um zu bestimmen, ob der Verdichter einen Fehler aufweist, und um den Grund für den Fehler gemäß dem zweiten Abgleichergebnis zu bestimmen.

12. Vorrichtung nach einem der Ansprüche 8 bis 11, wobei das Analyse- und Übertragungsmodul Folgendes umfasst:
ein Übertragungs-Submodul, das so konfiguriert ist, dass es sofortige Informationen über die Anomalie und sofortige Informationen über den Grund für die Anomalie an den zweiten Anschluss überträgt, wenn der Grund für die Anomalie ermittelt wird.

13. Vorrichtung (1800) zum Überwachen eines Status eines Endverdichters, die Folgendes umfasst:
einen Prozessor (1822);
einen Speicher (1832), der so konfiguriert ist, dass er eine vom Prozessor ausführbare Anweisung speichert;
wobei der Prozessor so konfiguriert ist, dass er das Verfahren nach einem der Ansprüche 1 bis 7 ausführt.

## Revendications

1. Procédé pour surveiller l'état d'un compresseur au niveau d'un premier terminal, consistant à :
obtenir (S101) un paramètre d'état de fonctionnement du compresseur au niveau du premier terminal ;
déterminer (S102) si le paramètre d'état de fonctionnement tombe dans une plage prédéfinie ;
déterminer (S103) qu'une anomalie du compresseur se produit si le paramètre d'état de fonctionnement ne tombe pas dans la plage prédéfinie ; et à
analyser (S104) une raison de l'anomalie et transférer des informations prédéfinies, indiquant la raison ou le type d'anomalie, à un second terminal qui présente une relation de commande avec le premier terminal ;
**caractérisé par :**
**le fait que**, lorsque le paramètre d'état de fonctionnement comprend un courant de travail du compresseur, la détermination (S102) de savoir si le paramètre d'état de fonctionnement tombe dans la plage prédéfinie consiste à :
déterminer (S301) si le courant de travail dépasse une plage de courant de travail prédéfinie dans un mode de fonctionnement prédéfini lorsque le courant de travail ne dépasse pas une plage prédéfinie de courant de travail normal du compresseur et lorsque le premier terminal est dans le mode de fonctionnement prédéfini.

2. Procédé selon la revendication 1, dans lequel l'obtention du paramètre d'état de fonctionnement du compresseur au niveau du premier terminal consiste à :
recevoir le paramètre d'état de fonctionnement par une connexion de communication préétablie avec le premier terminal.

3. Procédé selon la revendication 1 ou 2, dans lequel l'analyse de la raison de l'anomalie consiste à :
obtenir des informations sur le fonctionnement historique du compresseur et à déterminer la raison de l'anomalie en fonction des informations sur le fonctionnement historique du compresseur.

4. Procédé selon la revendication 3, dans lequel les informations sur le fonctionnement historique comprennent une durée de vie utile et un journal des défaillances du compresseur ;
dans lequel la détermination de la raison de l'anomalie en fonction des informations sur le fonctionnement historique du compresseur consiste à :
mettre en correspondance le journal des défaillances et un courant de travail actuel du compresseur avec un journal des défaillances préenregistré pour obtenir un premier résultat de mise en correspondance, à déterminer si le compresseur présente une défaillance et à déterminer la raison de la défaillance en fonction du premier résultat de mise en correspondance ;
déterminer si le compresseur a vieilli en fonction de la durée de vie utile du compresseur lorsqu'aucune défaillance ne se produit ; et à
déterminer si le compresseur n'exécute pas une instruction du mode de fonctionnement prédéfini, émise par un utilisateur lorsque le compresseur n'a pas vieilli.

5. Procédé selon une quelconque revendication précédente, dans lequel, lorsque le paramètre d'état de fonctionnement comprend un déplacement par vibration du compresseur, la détermination de savoir si le paramètre d'état de fonctionnement tombe dans la plage prédéfinie consiste à :
déterminer si le déplacement par vibration dépasse un seuil de déplacement prédéfini et dure pendant une période de temps supérieure à un seuil de temps prédéfini.

6. Procédé selon la revendication 5, dans lequel l'analyse de la raison de l'anomalie consiste à :
mettre en correspondance une courbe de déplacement par vibration correspondant au déplacement par vibration avec une courbe de déplacement par vibration préenregistrée correspondant à diverses défaillances pour obtenir un second résultat de mise en correspondance ; et à
déterminer si le compresseur présente une défaillance et déterminer la raison de la défaillance en fonction du second résultat de mise en correspondance.

7. Procédé selon l'une quelconque des revendications 1 à 6, dans lequel le transfert des informations prédéfinies au second terminal consiste à :
transférer des informations rapides sur l'anomalie au second terminal ; et à
transférer des informations rapides sur la raison de l'anomalie au second terminal lors de l'obtention de la raison de l'anomalie.

8. Appareil pour surveiller l'état d'un compresseur au niveau d'un premier terminal, comprenant :
un module d'obtention (91) configuré pour obtenir un paramètre d'état de fonctionnement du compresseur au niveau du premier terminal ;
un module de détermination (92) configuré pour déterminer si le paramètre d'état de fonctionnement tombe dans une plage prédéfinie ;
un module de détermination (93) configuré pour déterminer qu'une anomalie du compresseur se produit si le paramètre d'état de fonctionnement ne tombe pas dans la plage prédéfinie ; et
un module d'analyse et de transfert (94) configuré pour analyser une raison de l'anomalie, et pour transférer des informations prédéfinies, indiquant la raison ou le type d'anomalie, à un second terminal qui présente une relation de commande avec le premier terminal ;
**caractérisé par :**
**le fait que**, lorsque le paramètre d'état de fonctionnement comprend un courant de travail du compresseur, le module de détermination comprend :
un deuxième sous-module de détermination (121) configuré pour déterminer si le courant de travail dépasse une plage de courant de travail prédéfinie dans un mode de fonctionnement prédéfini lorsque le courant de travail ne dépasse pas une plage prédéfinie de courant de travail normal du compresseur et lorsque le premier terminal est dans le mode de fonctionnement prédéfini.

9. Appareil selon la revendication 8, dans lequel le module d'obtention comprend :
un sous-module d'obtention configuré pour recevoir le paramètre d'état de fonctionnement par une connexion de communication préétablie avec le premier terminal.

10. Appareil selon la revendication 8 à 9, dans lequel le module d'analyse et de transfert comprend :
un premier sous-module de détermination configuré pour obtenir des informations sur le fonctionnement historique du compresseur et pour déterminer la raison de l'anomalie en fonction des informations de fonctionnement historiques du compresseur, les informations sur le fonctionnement historique comprenant en particulier une durée de vie utile et un journal des défaillances du compresseur ;
le premier sous-module de détermination étant en outre configuré pour mettre en correspondance le journal des défaillances et un courant de travail actuel du compresseur avec un journal des défaillances préenregistré pour obtenir un premier résultat de mise en correspondance, et configuré pour déterminer si le compresseur présente une défaillance, et déterminer la raison de la défaillance selon le premier résultat de mise en correspondance ;
le premier sous-module de détermination étant en outre configuré pour déterminer si le compresseur a vieilli en fonction de la durée de vie utile du compresseur lorsqu'aucune défaillance ne se produit ; et
le premier sous-module de détermination étant en outre configuré pour déterminer si le compresseur n'exécute pas une instruction du mode de fonctionnement prédéfini, émise par un utilisateur lorsque le compresseur n'a pas vieilli.

11. Appareil selon l'une quelconque des revendications 8 à 10, dans lequel, lorsque le paramètre d'état de fonctionnement comprend un déplacement par vibration du compresseur, le module de détermination comprend :
un troisième sous-module de détermination configuré pour déterminer si le déplacement par vibration dépasse un seuil de déplacement prédéfini et dure pendant une période de temps plus longue qu'un seuil de temps prédéfini, le module d'analyse et de transfert comprenant :
un deuxième sous-module de détermination configuré pour mettre en correspondance une courbe de déplacement par vibration correspondant au déplacement par vibration avec une courbe de déplacement par vibration préenregistrée correspondant à diverses défaillances pour obtenir un second résultat de correspondance, et configuré pour déterminer si le compresseur présente une défaillance, et déterminer la raison de la défaillance en fonction du second résultat de mise en correspondance.

12. Appareil selon l'une quelconque des revendications 8 à 11, dans lequel le module d'analyse et de transfert comprend :
un sous-module de transfert configuré pour transférer des informations rapides de l'anomalie au second terminal, et pour transférer des informations rapides de la raison de l'anomalie au second terminal lorsque la raison de l'anomalie est obtenue.

13. Appareil (1800) pour surveiller l'état d'un compresseur terminal, comprenant :
un processeur (1822) ;
une mémoire (1832) configurée pour mémoriser une instruction exécutable par le processeur ;
le processeur étant configuré pour exécuter le procédé selon l'une quelconque des revendications 1 à 7.
